Europäisches Patentamt

European Patent Office

Office européen des brevets

(19)

(11) Veröffentlichungsnummer: **0 302 408**
**A2**

(12) **EUROPÄISCHE PATENTANMELDUNG**

(21) Anmeldenummer: 88112340.0

(22) Anmeldetag: 29.07.88

(51) Int. Cl.⁴: **F16L 55/00 , F16L 59/02**

(30) Priorität: 31.07.87 DE 8710558 U
28.08.87 DE 3728820

(43) Veröffentlichungstag der Anmeldung:
08.02.89 Patentblatt 89/06

(84) Benannte Vertragsstaaten:
AT CH DE FR LI

(71) Anmelder: E. Missel GmbH & Co.
Hortensienweg 2 und 27
D-7000 Stuttgart 50(DE)

(72) Erfinder: Schäfer, Wolfgang
Endersbacher Strasse 51
D-7000 Stuttgart 50(DE)

(74) Vertreter: Dipl.-Phys.Dr. Manitz
Dipl.-Ing.Dipl.-Wirtsch.-Ing. Finsterwald
Dipl.-Phys. Rotermund Dipl.-Chem.Dr. Heijn
B.Sc.(Phys.) Morgan
Robert-Koch-Strasse 1
D-8000 München 22(DE)

(54) Kunststoffrohr-Vorrichtung.

(57) Es wird ein flexibles Schutzrorh zur Aufnahme von Kunststoffrohrleitungen beschrieben, das von zumindest einer Schicht aus Dämmaterial umschlossen ist. In diesen Schutzrohraufbau ist ein dessen elektrische Ortung ermöglichendes Metallelement integriert, das sich über die gesamte Länge des Schutzrohrs erstreckt.

EP 0 302 408 A2

## Kunststoffrohr-Vorrichtung

Die Erfindung betrifft eine Kunststoffrohr-Vorrichtung bestehend aus einem Schutzrohr und einer parallel dazu verlaufenden, innerhalb des Schutzrohres angeordneten, ein Medium führenden Kunststoffrohrleitung.

Kunststoffrohleitungen werden in zunehmenden Maße in der Praxis als Kalt- oder Warmwasserleitungen in Bauten eingesetzt. Um derartige Kunstoffrohrleitungen vor Beschädigungen zu schützen, ist es bekannt, sog. Rohr-im-Rohr-Systeme zu verwendung, bei denen eine das warme oder kalte Medium führende Kunststoffrohrleitung in einem Schutzrohr angeordnet wird.

Nachteilig bei diesen bekannten Rohr-im-Rohr-Systemen ist einerseits, daß sie die hinsichtlich der Dämmung bestehenden Forderungen nicht bzw. nur dann erfüllen, wenn auf vergleichsweise aufwendige Weise Dämmaterial zum Beispiel durch einen Wickelvorgang aufgebracht wird. Außerdem ist bei Verwendungen dieser Systeme die Gefahr besonders groß, daß unter Putz verlegte Leitungen später durch Nägel oder Bohrvorgänge beschädigt werden, da diese Leitungen mittels der bekannten Suchgeräte nicht mehr lokaliersbar sind. Diese Gefahr wird dann besonders groß, wenn - wie es ebenfalls praxis ist - gerade solche Rohr-im-Rohr-Systeme auf Böden und an Wänden nicht immer geradlinig, sonder entsprechend dem kürzesten Weg verlegt werden.

Aufgabe der Erfindung ist es daher, eine Kunststoffrohrvorrichtung mit Kunststoffrohrleitungen zu schaffen, die einerseits stets eine den jeweiligen Vorschriften Rechnung tragende Dämmung gewährleistet und andererseits auch nach erfolgter Verlegung eine Lokalisierung des jeweiligen Verlaufs der Kunststoffrohleitung ermöglicht.

Gelöst wird diese Aufgabe nach der Erfindung im wesentlichen dadurch, daß das aus Kunststoffmaterial bestehende Schutzrohr von zumindest einer Schicht aus Dämmaterial umschlossen ist und daß ein die elektrische Ortung ermöglichendes, längliches Metallelement integriert ist, das sich über die Länge des Schutzrohres bzw. der Kunststoffrohrleitung erstreckt.

Die unmittelbare Kombination des insbesondere aus einem Wellrohr bestehenden Schutzrohrs mit einer dieses Rohr umschließenden Dämmung von der jeweils geforderten Dämmstärke führt zu einer einfach zu handhabenden, die Erfüllung bestehender gesetzlicher Bestimmungen mit sich bringenden Anordnung, die überdies den ganz wesentlichen Vorteil besitzt, daß sie jederzeit mittels herkömmlicher Geräte in gleicher Weise wie Metallrohre geortet werden kann. Der dazu erforderliche Aufwand ist dabei sehr gering.

Vorteilhafte Weiterbildungen der Erfindung sind durch die Unteransprüche gekennzeichnet.

Die Ausführungsform nach Anspruch 2 ermöglicht es, daß die erfindungsgemäße Kunststoffrohrvorrichtung nicht nur geradlinig oder entsprechend vorgekrümmter Rohrteile sondern beliebig geradlinig oder gekrümmt verlegt werden kann.

Wenn das verwendete Metallelement Drahtoder Streifenform besitzt, kann das Einbringen dieses Metallelements praktisch ohne jeglichen Zusatzaufwand während des Vorgangs des Ummantelns des Schutzrohres mit dem Dämmaterial erfolgen, indem man das Metallelemente ganz einfach mit in die Formmatrize einlaufen läßt.

Das Metallelement kann längs des Schutzrohres geradlinig verlaufen. Im Falle eines wendelförmigen Verlaufs, welcher ebenfalls vorgesehen sein kann, wird die Ortung weiter erleichtert.

Die Wendel kann dabei relativ langgestreckt sein, so daß vergleichsweise wenig Metall für die Schaffung der elektrischen Ortungsmöglichkeit verwendet werden muß.

Wenn das Metallelement zwischen Schutzrohr und Dämmaterialschicht angeordnet ist, kann ein kompletter Rohraufbau bestehend aus Dämmaterial, Metallelement und Schutzrohr vorgefertigt und angeliefert werden, in den dann nur noch die Kunststoffrohrleitung eingezogen werden muß.

Es ist aber auch möglich, daß das Metallelement zwischem den Schutzrohr und der Kunststoffrohrleitung angeordnet ist. In diesem Fall ist es zum einen zweckmäßig wenn das Metallelement an der Innenwand des Schutzrohres befestigt ist.

Grundsätzlich ist es aber auch möglich, daß das Metallelement auf der Kunststoffrohrleitung angeordnet ist.

Damit auch im letzteren Fall der Schutzrohraufbau einschließlich des Metallelements getrennt vorgefertigt und nachträglich mit der Kunststoffrohrleitung versehen werden kann, ist es besonders bevorzugt, wenn das als Wendel ausgebildete Metallelement zunächst einen Druchmesser größer als die Kunststoffrohrleitung aufweist und erst nach Einbringen der Kunststoffrohrleitung in das Schutzrohr durch in Längsrichtung ausgeübten Zug im Durchmesser so verkleinert ist, daß das Metallelement direkt auf der Außenfläche der Kunststoffrohrleitung aufliegt.

Hier wird die Eigenschaft einer Wendel, durch Axialzug und/oder entgegengesetztes Verdrehen ihrer Enden den Innendurchmesser zu verändern, ausgenutzt, um zunächst die Kunststoffrohrleitung in das innen mit dem wendelförmigen Metallelement versehene Schutzrohr einzuziehen und dann durch axialen Zug an der Wendel das Metallelement auf dem Umfang der Kunststoffrohrleitung zu fixieren.

Nach einer besonders vorteilhaften Ausführungsvariante der Erfindung wird das Metallelement von einem auf der Dämmstoff-Längsnaht befestigten Streifen gebildet, wobei dieser Streifen vorzugsweise aus einem zumindest einseitig mit Kunststoff beschichteten Aluminiumstreifen besteht und die Verbindung zwischen diesem Streifen und der Dämmung durch Verschweißen der Außenschicht der Dämmung mit der ihr zugewandten Kunststoffschicht des Metallstreifen-Verbundmaterials erfolgt.

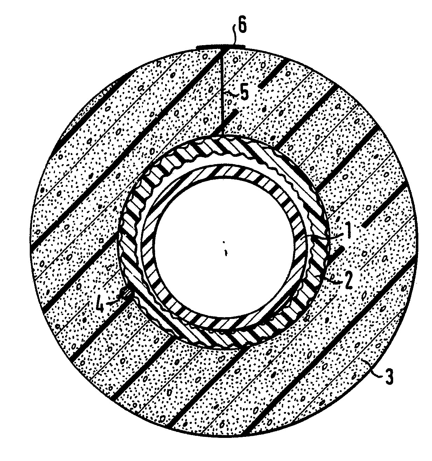

Die Erfindung wird im folgenden beispielsweise anhand der Zeichnung beschrieben, deren einzige Figur einen schematischne Querschnitt einer erfindungsgemäßen Kunststoffrohrvorrichtung zeigt.

Eine flexible Kunststoffrohrleitung 1, die ein kaltes oder warmes Medium, insbesondere Wasser führt, ist zum Schutz vor Beschädigung und zur gleichzeitigen Dämmung in einem Schutzrohr 2 angeordnet, das vorzugsweise aus einem Wellrohr besteht. Dieses Schutzrohr 2 ist seinerseits fest verbunden mit einer Schicht 3 aus Dämmaterial, insbesondere Schaumstoffmaterial, das eine den jeweiligen Dämmerfordernissen entsprechende radiale Dicke besitzt und aus einer oder mehreren Schichten aufgebaut sein kann.

Die das Schutzrohr 2 umgebende Dämmaterialschicht 3 ist längs einer Radialebene 5 mitsich selbst verbunden, insbesondere verklebt oder verschweißt, und radial außen ist längs dieser Verbindungsstelle ein Streifen 6 vorgesehen, der wiederum vorzugsweise durch Schweißen mit dem Dämm material 3 verbunden ist.

Um eine elektrische Ortung einer solchen Kunststoffrohrvor richtung bei Unterputz-Montage vergleichbar zu einem Metallrohr zu ermöglichen, ist ein sich über die gesamte Längsabmessung dieser Anordnung erstreckendes Metallelement 4 in Form eines metallischen Streifens oder Drahtes vorgesehen.

Dieses Metallelement 4 kann auf unterschiedliche Art und Weise in dem Gesamtaufbau von Wellrohr 2 und Dämmung 3 angebracht werden.

In der Zeichnung ist der Falls der Anordnung des metallischen Elements 4 am Außenumfang des Wellrohrs 2 dargestellt, und das Metallelement 4 wird in diesem Falle ganz einfach durch Klemmung zwischen dem Wellrohr 2 und dem Dämmaterial 3 fixiert.

Eine vorteilhafte Ausführungsvariante der Erfindung bestehtdarin, das Metallelement dadurch zu bilden, daß als Verschlußstreifen 6 ein Verbundfolienstreifen verwendet wird, d.h. ein Streifen, bei dem eine Metallschicht, insbesondere eine Aluminiumschicht ein- oder beidseitig mit Kunststoffmaterial, z.B. Polyethylen, kaschiert ist, wobei die Verbindung mit dem Dämmaterial über eine Kunststoffschicht durch einen Schweißvborgang hergestellt wird und der Metallstreifen die Ortung einer solchen Kunststoffrohr-Vorrichtung gewährleistet.

Von besonderem Vorteil ist es auch, als ortbares Element ein aus NE-Metall bestehendes Element zu verwenden, da auf diese Weise bei der Ortung zwischen metallischen Teilen, wie z.B. großflächigem Streckmetall, und der Kunststoffrohr-Vorrichtung besonders gut unterschieden werden kann.

Bei allen Ausführungsvarianten ist es gleichermaßen von Vorteil, daß das Einbringen des Metallelemtes während des Fertigungsvorgangs praktisch keinen merkbaren Zusatzaufwnad erfor dert und dennoch auf diese Weise ein Gesamtsystem erhalten wird, das hinsichtlich der in der Praxis bedeutsamen Ortungsfähigkeit vergleichbare Eigenschaften wie herkömmliche Metallrohre aufweist.

## Ansprüche

1. Kunststoffrohr-Vorrichtung bestehend aus einem Schutzrohr und einer parallel dazu verlaufenden, innerhalb des Schutzrohrs angeordneten, ein Medium führenden Kunststoffrohrleitung,
dadurch **gekennzeichnet,**
daß das aus Kunststoffmaterial bestehende Schutzrohr (2) von zumindest einer Schicht (3) aus Dämmaterial umschlossen ist und daß ein die elektrische Ortung ermöglichendes, längliches Metallelement (4,6) integriert ist, das sich zumindest über Teilbereiche der Länge des Schutzrohres (4) bzw. der Kunststoffrohrleitung (1) erstreckt.

2. Vorrichtung nach Anspruch 1,
dadurch **gekennzeichnet,**
daß das Metallelement (4) Draht- oder Streifenform besitzt und insbesondere als Wendel ausgebildet ist, deren Achse parallel zum Schutzrohr (2) bzw. Kunststoffrohrleitung (1) verläuft.

3. Vorrichtung nach Anspruch 1,
dadurch **gekennzeichnet,**
daß die Kunststoffrohrleitung (1) und das insbesondere als Wellrohr ausgebildete Schutzrohr (2) aus flexiblem Kunststoffmaterial bestehen.

4. Vorrichtung nach einem der vorhergehenden Ansprüche,
dadurch **gekennzeichnet,**
daß das Metallelement (4) zwischem dem Schutzrohr (2) und der Dämmaterialschicht (3) oder zwischen dem Schutzrohr (2) und der Kunststoffrohrleitung (1) angeordnet, an der Innenwand des Schutzrohres (2) befestigt oder auf der Kunststoffrohrleitung angebracht ist.

5. Vorrichtung nach Anspruch 2 oder 4, dadurch **gekennzeichnet,** daß das als Wendel ausgebildet Metallelement (4) zunächst einen Wendeldurchmesser größer als die Kunststoffrohrleitung (1) aufweist und erst nach Einbringen der Kunststoffrohrleitung (1) in das Schutzrohr (2) durch in Längsrichtung ausgeübten Zug im Durchmesser so verkleinert ist, daß das Metallelement (4) direkt auf der Außenfläche der Kunststoffrohrleitung (1) aufliegt.

6. Vorrichtung nach einem der vorhergehenden Ansprüche, dadurch **gekennzeichnet,** daß das Metallelement (4) zwischen dem Schutzrohr (2) und der Dämmaterialschicht (3) durch Klemmung gehalten oder in einer radial verlaufenden Verbindungsebene (5) des Dämmaterials (3) fixiert ist.

7. Vorrichtung nach einem der vorhergehenden Ansprüche, dadurch **gekennzeichnet,** daß das Metallelement in eine Dämmstoffschicht eingeschäumt oder zwischen zwei in Radialrichtung aufeinanderfolgenden Dämmstoffschichten gelegen ist.

8. Vorrichtung nach einem der vorhergehenden Ansprüche, dadurch **gekennzeichnet,** daß das Schutzrohr (2) zumindest eine metallische Teilbeschichtung trägt.

9. Vorrichtung nach Anspruch 1, dadurch **gekennzeichnet,** daß das Metallelement aus einer Vielzahl von in das Schaumstoffmaterial oder das Schutzrohr (2) integrierten und/oder auf dessen Oberfläche aufgebrachten Metallpartikeln besteht.

10. Vorrichtung nach einem der vorhergehenden Ansprüche, dadurch **gekennzeichnet,** daß Metallpartikel in dem zur Verbindung des Dämmstoffs verwendeten Schmelzkleber vorgesehen sind, um das Metallelement zu bilden.

11. Vorrichtung nach einem der vorhergehenden Ansprüche, dadurch **gekennzeichnet,** daß eine das Dämmaterial umschließende Außenschutzhülle vorgesehen ist, die zumindest metallische Teilbereiche und/oder Elemente aufweist, um das Metallelement zu bildne oder daß in die Außenschutzhülle ein Verstärkungsnetz, insbesondere aus metallisierten Fäden integriert ist.